(19) Europäisches Patentamt
European Patent Office
Office européen des brevets

(11) **EP 2 270 433 B1**

(12) **EUROPÄISCHE PATENTSCHRIFT**

(45) Veröffentlichungstag und Bekanntmachung des Hinweises auf die Patenterteilung:
**13.08.2014 Patentblatt 2014/33**

(51) Int Cl.:
***G01D 5/241*** *(2006.01)*

(21) Anmeldenummer: **10006223.1**

(22) Anmeldetag: **16.06.2010**

(54) **Kapazitiver Drehwinkelsensor**

Capacitative rotation angle sensor

Capteur d'angle de rotation capacitif

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **04.07.2009 DE 102009031664**

(43) Veröffentlichungstag der Anmeldung:
**05.01.2011 Patentblatt 2011/01**

(73) Patentinhaber: **Camille Bauer Metrawatt AG**
**5610 Wohlen (CH)**

(72) Erfinder:
• **Zimmermann-Schwitter, Martin**
**5102 Rupperswil (CH)**

• **Merki, Gallus**
**5417 Untersiggenthal (CH)**

(74) Vertreter: **Barth, Carl Otto**
**ABACUS Patentanwälte**
**Klocke Späth Barth**
**Zürichstrasse 34**
**8134 Adliswil/Zürich (CH)**

(56) Entgegenhaltungen:
**EP-A1- 1 538 422    WO-A1-2007/043962**
**DE-A1- 4 234 016**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

**Technisches Gebiet**

Diese Erfindung betrifft eine Vorrichtung zur kapazitiven Abtastung von Kreisteilungen, vielfach als Drehwinkelsensor, aber auch als Drehwinkelcodierer oder Drehgeber bezeichnet. Viele Anwendungen zur Messung der Position, der Geschwindigkeit oder der Beschleunigung erfordern solche Drehwinkelsensoren mit aussergewöhnlich hoher Genauigkeit und Auflösung des angezeigten bzw. ausgegebenen Winkelwertes, oft auf wenige Winkelminuten. Derartige hochpräzise Drehwinkelsensoren werden oft in widrigen Umgebungen, d.h. Umgebungen mit grossen Temperaturschwankungen und/oder starken Vibrationen und/oder Schmutz und/oder Wasser usw. eingesetzt, z.B. an Dampf- oder Wasserturbinen, an Wehrklappen, in Lokomotiven oder an Fahrzeugaufbauten. Auch bei einem solchen Einsatz wird erwartet, dass sie über viele Jahre zuverlässig, verschleiss- und wartungsfrei und ohne Minderung der Genauigkeit ihre Aufgabe erfüllen.

**Hintergrund und Stand der Technik**

Drehgeber werden heute auf vielen Gebieten zur Steuerung und Überwachung von Maschinen und Fahrzeugen eingesetzt. Eine besondere Rolle spielen dabei kontaktfreie Geräte, da sie auch unter schwierigen Bedingungen zuverlässig arbeiten und eine lange Lebensdauer dank ihrer verschleissfreien Sensorik haben. Sie können auf optischer, induktiver, magnetischer oder kapazitiver Basis arbeiten. Kapazitive Drehwinkelsensoren wandeln eine Drehbewegung durch kapazitive Interaktion zwischen mindestens einem Rotor und mindestens einem Stator in ein Ausgangssignal um. Ihre einfache Bauart macht kapazitive Drehgeber zu einem günstigen, robusten und sicheren Sensor. Es gibt mehrere Bauarten solcher kapazitiver Drehwinkelsensoren. Je nach Form und Lage der Elektroden und des Rotors ist es möglich, einen Bereich von 360° oder einen Bruchteil davon zu messen.

In einer ersten Bauart befindet sich ein elektrisch leitender Rotor in einem festen Abstand zu einem Stator oder zwischen zwei Statoren, der oder die eine gewisse Anzahl Elektroden beinhalten. Die positionsabhängige Kapazität wird zwischen diesen Sende-Elektroden auf dem Stator und der gemeinsamen Empfängerelektrode auf dem Rotor gebildet. Diese Bauart ist problematisch, weil die Messschaltung eine elektrische Verbindung zum Rotor benötigt. Diese wird entweder über eine feste Drahtverbindung oder über Schleifkontakte gebildet. Die erste Anschlusslösung erlaubt kein unbegrenztes Durchdrehen des Rotors und die zweite Lösung ist nicht verschleiss- und reibungsfrei.

In einer zweiten Bauart befinden sich die Sende- und Empfängerelektroden auf zwei oder mehr Statoren zwischen denen ein (oder mehrere) dielektrischer Rotor das elektrische Feld moduliert. Der dielektrische Rotor ist in seiner Umfangsform und/oder seiner Dicke entsprechend strukturiert, um ein winkelabhängiges Ausgangssignal zu erhalten.

Eine dritte Bauart unterscheidet sich von der zweiten Bauart dadurch, dass der Rotor aus einem strukturierten elektrisch leitenden Material besteht oder auf einem nichtleitenden Träger eine elektrisch leitende Schicht aufstrukturiert ist. Diese Struktur ist elektrisch geerdet und wirkt als elektrischer Schirm womit die Kapazität zwischen der Sende- und Empfangselektroden selektiv verändert wird. Für die Erdung gibt es verschiedene Techniken, wobei für einen Vollrotations-Drehgeber nur eine solche ohne feste elektrische Verbindung oder ohne Schleifring sinnvoll ist. Mittels einer Feedback-Schaltung kann der Rotor über ein zusätzliches Elektrodenpaar auf den Statoren auf eine virtuelle Masse, d.h. konstantes Potential geregelt werden. Somit werden Schleifringe überflüssig.

Bei einer weiteren, vierten Bauart besteht der Rotor aus einem isolierenden Träger, auf dem auf beiden Seiten elektrisch leitende Schichten aufgebracht sind, die miteinander elektrisch verbunden sind. Durch das strukturieren von mindestens einer dieser Schichten erhält man eine winkelabhängige Kopplung zwischen der Sende- und Empfangselektrode auf den Statoren.

Eine fünfte Bauart besteht aus nur einem Stator und einem Rotor. Auf dem gleichen Substrat des Stators befinden sich Sende- und Empfangselektroden. Der Rotor besteht aus elektrisch leitenden strukturierten Schichten, die eine winkelabhängige Kopplung zwischen Sende- und Empfangselektrode auf dem Stator bewirken.

Es sind noch weitere Bauarten bekannt, die aber auf den oben beschriebenen Bauarten aufbauen.

So ist beispielsweise in der DE 42 34 016 A1 eine kapazitiv arbeitende Positionsmeßvorrichtung beschrieben, die mehrere Teilkapazitäten aufweist. Dabei variiert deren Wert mit der Drehstellung eines Rotors, wobei die Variation im Prinzip einer Sinusfunktion in Abhängigkeit vom Drehwinkel des Rotors folgt. Rotor oder Teilkapazitäten weisen definierte Berandungen auf. Die gemessenen Kapazitätswerte werden in Zeitkonstanten bzw. Frequenzen umgewandelt, die als Stützwerte einer periodischen Funktion dienen, deren spektrale Analyse mittels Mikroprozessor-Berechnung die Drehstellung bestimmt.

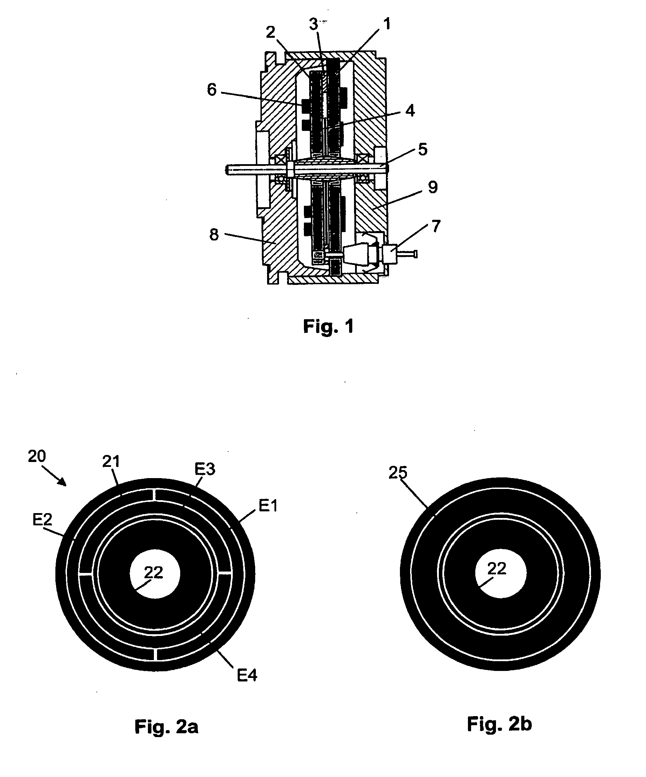

Zur besseren Erläuterung der vorliegenden Erfindung ist im Zusammenhang mit den Figuren 1 bis 6 der derzeitige Stand der Technik dargestellt und beschrieben.

Ein Vollrotations-Drehwinkelsensor der dritten Bauart, der auf dem Markt erhältlich ist, wird unter der Bezeichnung "Kinax 2W2" von der Firma Camille Bauer AG, Wohlen, Schweiz, produziert. Dieser ist schematisch in Fig. 1 in einem Längsschnitt gezeigt und wird nachfolgend noch genauer beschrieben. Das dabei angewendete Messverfahren ausführlich dargelegt ist in der EP 1 251 338.

Im Prinzip besteht der vom Drehwinkel abhängige Kondensator - und damit der eigentliche Messwertgenerator dieses Drehwinkelsensors - aus zwei im Gehäuse fest angeordneten Kondensatorplatten; einer segmen-tierten Differenzialkondensatorplatte 1 und einer gemeinsamen Empfangselektrodenplatte 2, die sich in einem geringen Abstand gegenüberstehen und zwischen denen ein elektrisches Feld erzeugt wird. Dieses elektrische Feld wird von der Fahne 4, die drehbar um die Mittelachse angeordnet ist und mit der Achse 5 fest verbunden ist, beeinflusst. Zwischen der Sendeund Empfangselektrodenplatte 1 bzw. 2 liegt ein Distanzring 3, der für einen festen, definierten Abstand der Elektrodenplatten und der Fahne 4 sorgt. Die Fahne 4 besteht aus 0.3 mm dickem Aluminium. Die Auswerteelektronik 6 liegt auf den äusseren Seiten der Kondensatorplatten und wird über zwei Durchführungsfilter 7 mit Energie versorgt und ausgelesen. Diese Durchführungsfilter 7 bilden zusammen mit den Aluminiumgehäuseschalen 8 und 9 einen wirksamen Schutz gegenüber äussere, auf den Drehgeber wirkende, elektrische Fremdfelder.

Die Segmente der Differenzialkondensatorplatte 1 bilden vier konzentrisch angeordnete und jeweils halbkreisringförmige Elektroden 21: E1, E2, E3 und E4. Die Elektrodenpaare E1, E2 sowie E3, E4 bilden zusammen mit der gemeinsamen Empfangselektrode 25 je einen Differenzialkondensator. Dabei überlappen sich die halbkreisringförmigen Elektrodenbereiche benachbarter Elektroden um 90°; dies ist in Fig. 2a gezeigt. Zwischen diesen Kondensatorelektroden 21 und der Empfangselektrode 25 in Fig. 2b befindet sich ein drehbarer, elektrisch leitender, ebenfalls segmentierter Rotor 4, der auf einer nach aussen führenden Achse 5 befestigt und über eine Regelschaltung und zwei separaten Regelelektroden 22 auf den Statoren virtuell geerdet ist. Beim Verdrehen dieser Achse gegenüber dem Gehäuse ändern sich die Kapazitäten der Differentialkondensatoren entsprechend der Winkelposition der Achse. Diese Veränderungen werden von der ebenfalls im Gehäuse angeordneten Messschaltung 6, die beim hier beschriebenen Drehwinkelsensor digital ausgelegt ist, ermittelt und entsprechend angezeigt.

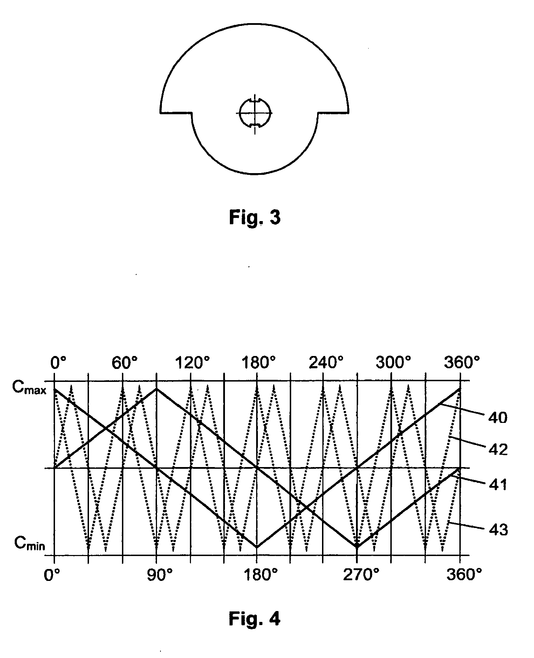

Eine zur Differenzialkondensatorplatte 20 passende Fahne zeigt Fig. 3. Sie besteht aus 0.3mm dickem Aluminium und schirmt über einen Winkelbereich von 180° die Empfangselektrode 2 ab. Im Inneren Bereich ist die Fahne Deckungsgleich mit den Regelelektroden 22 auf den beiden Statorplatten.

Fig. 4 zeigt den Kapazitätsverlauf der beiden Differentialkapazitäten in Abhängigkeit der Verdrehung der Fahne 4 gegenüber der Differenzialkondensatorplatte 1. Durch die um 90° verschobene Anordnung der Einzelelektroden 21 auf der Differenzialkondensatorplatte entstehen um ebenfalls 90° verschobene Kapazitätsverläufe. Bei Verwendung der Differenzialkondensatorplatte 1 gemäss Fig. 2a und der Abschirmfahne 4 gemäss

Fig. 3 resultieren die Kapazitätsverläufe 40 und 41 gemäss Fig. 4 mit einer örtlichen Periodizität von 360°.

Um die Winkelgenauigkeit zu erhöhen, können die Segmente der Differenzialkondensatorelektroden 21 häufiger geteilt werden. Eine Mittelwertbildung über die einzelnen Segmente verringert Einflüsse wie Exzentrizitätsfehler des Rotors oder der Elektroden, Winkelfehler der Drehachse, Topologieänderungen der Elektroden- oder Rotoroberflächen, Gradienten von Materialeigenschaften sowie geometrische Symmetriefehler. Durch die daraus resultierende fortlaufende örtliche Periodizität der Kapazitätssignale wird jedoch der absolute Messbereich auf die Grösse einer solchen örtlichen Periode limitiert. Eine solche örtliche Periode ist dabei eine ganzzahlige Teilung von 360°. In der Literatur spricht man dabei von einer Feinspur.

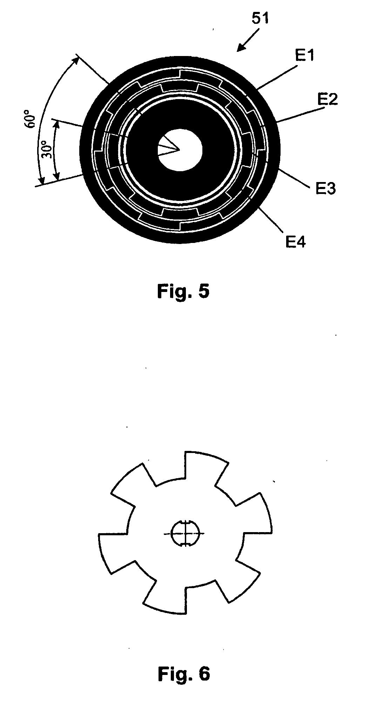

Fig. 5 zeigt die Differenzialkondensatorelektroden 51 einer weiteren Ausführung des Kinax 2W2 der Firma Camille Bauer AG mit einem Messbereich von maximal 60°. Die Verdrehung der Differenzialelektrodenpaare gegeneinander beträgt in dieser Ausführung 15°. Die entsprechenden Kapazitätsverläufe 42 und 43 sind ebenfalls in Fig. 4 aufgezeichnet. Die örtliche Periode beträgt in diesem Fall 60°. Fig. 6 zeigt die dazugehörende Abschirmfahne aus Aluminium mit der entsprechenden Segmentierung.

Um eine absolute, eindeutige Messung über den vollen Messbereich von 360° zu erhalten, muss die Feinspur mit einer so genannten Grobspur kombiniert werden. Dabei besitzt die Grobspur eine örtliche Periodizität von mindestens eins über den vollen Drehbereich. Für eine ein-eindeutige Auswertung dürfen Fein- und Grobspur keinen gemeinsamen Teiler in ihrer Periodizität aufweisen (ausser n = 1). Die Ausgangssignale der Grobspur müssen im Wesentlichen nur so genau sein, dass deren Auswertung eine eindeutige Bestimmung des entsprechenden Segmentes der Feinspur ermöglicht.

Kapazitive Vollrotations-Drehwinkelsensoren sind beispielsweise auch in der EP 1 173 730 beschrieben. In einer der darin gezeigten Ausführungen weist eine feststehende Kondensatorelektrode zwei konzentrische Spuren auf, eine Grobspur und eine Feinspur. Die Grobspur ist "ein- oder mehrpolig" ausgelegt, d.h. der Rotor durchläuft bei jeder Umdrehung mindestens einen Zyklus. Die Feinspur ist "mehrpolig" und feiner unterteilt, in einer gezeigten Anordnung hat sie z.B. 64 Segmente. Der Rotor hat ebenfalls eine mehrpolige Struktur, z.B. 16 Pole, die als "sinusoidal", d.h. sinusförmig, bezeichnet sind.

Die europäische Patentanmeldung 1 538 422, die eine Teilanmeldung der o.g. EP 1 173 730 ist, beschreibt einen ähnlichen kapazitiven Vollrotations-Drehwinkelsensor, bei dem der Rotor ebenfalls zwischen zwei Statoren, auf denen die Kondensatorelektroden angeordnet sind, liegt und zwei strukturierte Spuren aufweist, eine Grob- und eine Feinspur. Diese Spuren werden ebenfalls als mehrpolige Strukturen beschrieben. Die Form der Feinspur ist als "sinusoidal", d.h. sinusförmig, bezeichnet.

Im US-Patent 4 429 307 wird ein kapazitiver Weggeber dargestellt, der in einer Ausführungsform ebenfalls einen Vollrotations-Drehwinkelgeber der o.g. fünften Bauart darstellt. Der beschriebene Rotor weist zwei konzentrische, durch einen wellenförmigen Spalt getrennte leitfähige Bereiche auf. Bei Drehung des Rotors erzeugen diese auf den stationären Kondensatorelektroden eine als "sinusoidal" bezeichnete Überlappung oder Überdekkung zwischen den stationären Sende- und Empfangselektrodensegmenten und den Rotorsegmenten. Bei einem linearen Messaufnehmer ist dieser Spalt als eine Sinusfunktion definiert. Für eine Drehgeberanwendung folgt der isolierende Spalt auf dem Rotor nicht einer genauen Sinus- bzw. Kosinusfunktion, sondern ist verzerrt.

All diesen bekannten Vollrotations-Drehwinkelgeber haften Nachteile an. Zum einen sind sie recht komplex aufgebaut oder die Ausgangsspannungen der einzelnen Elektroden sind nicht rein sinusförmig, sondern enthalten gewisse harmonische Überlagerungen, was einer Verzerrung gleichkommt und entsprechende Korrekturen in der Auswertung verlangt. Sind sie nach Bauart 5 aufgebaut, kommen noch Fehler durch Axialspiel des Rotors oder durch einen Winkelfehler zwischen Drehachse und Statorebene dazu.

Die vorliegende Erfindung vermeidet diese Nachteile, indem sie eine einfache und robuste Anordnung eines Vollrotations-Drehwinkelgebers nach Bauart 2 zeigt. Bei diesem ist schon der mechanisch erzeugte Messwert so genau, dass überhaupt keine oder nur minimale elektronische Korrekturen notwendig sind, womit die notwendige elektronische Auswerteschaltung des Drehwinkelgebers vereinfacht wird und sich eine Kalibrierung erübrigt. Dazu kommt, dass der Rotor als dielektrisches Bauteil ausgebildet werden kann, wodurch jede elektrische Übertragung vom oder zum beweglichen Teil des Drehwinkelgebers sowie eine Erdung des Rotors entfällt. Dass sich dadurch die Leistungsaufnahme sowie der Platzbedarf verringert und damit die Bauweise robuster ausgeführt werden kann, ist ein weiterer Vorteil. So lässt sich auf denselben Statorplatten, die die Elektroden beinhalten, die komplette Auswerteschaltung platzieren. Mit Hilfe dieser Erfindung ist es z.B. möglich, einen genauen, analogen 2-Draht-"Loop-Powered"-Absolutgeber mit 4...20mA Ausgangssignal zu bauen. Die oben erwähnten Winkelfehler zwischen Drehachse und Statorebenen (Tilt) sowie ein mögliches Axialspiel des Rotors wird in der Bauart 2 durch die Anordnung von Rotor und Statoren in erster Ordnung kompensiert.

**Zusammenfassung der Erfindung**

Primäres Ziel der vorliegenden Erfindung ist die Schaffung eines kapazitiven Drehgebers einfacher Bauart, der ohne digitale oder elektronische Nachbearbeitung genaue, d.h. reine Sinus- und Kosinussignale als Ausgang liefert. Dabei soll die Winkelposition genauer als bisher bestimmt werden. Ausserdem soll sie sich auf einfachere Art als bisher bestimmen lassen.

Weiterhin soll ein Drehgeber gemäss der vorliegenden Erfindung absolut unempfindlich gegenüber magnetischen Streufeldern sein, wodurch sich viele Anwendungen eröffnen, bei denen ein magnetischer Drehgeber versagen würde.

Bedingt durch das Sensorprinzip kann ein magnetischer Drehgeber keine durchgehende Hohlwelle haben. Die vorliegende Erfindung erlaubt es jedoch, einen kapazitiven absoluten Drehgeber mit einer durchgehenden Hohlwelle zu bauen.

Durch das mehrfache, periodische Platzieren von gleichen Elektrodensegmentgruppen auf dem Stator und das periodische Strukturieren des Rotors wird der hier beschriebene Drehgeber annähernd unempfindlich auf mechanische Toleranzen in der vertikalen (Tilt) und horizontalen (Versatz) Ausrichtung der Statoren und des Rotors zueinander.

Erfindungsgemäss sind dazu mindestens zwei ruhende Statoren in einem festen Abstand angeordnet. Auf der einen Statorinnenseite liegt eine gemeinsame Empfangselektrode und auf der anderen pro Periode der Feinspur eine gewisse Anzahl Sendeelektroden als Kreisringsegmente oder Kreissektorsegmente. Zwischen diesen Statoren liegt in einem festen Abstand ein voll durchdrehbar gelagerter und mit dem zu messenden Objekt fest verbundener Rotor aus einem dielektrischen Material. Die Umfangslinie oder -naht dieses dielektrischen Rotors ist als "verzerrte Sinusfunktion" ausgebildet, so dass der Rotor das elektrische Feld zwischen den Statoren in der Weise beeinflusst, dass der Verlauf der Kapazität zwischen jeder einzelnen Sendeelektrode und der gemeinsamen Empfangselektrode eine genaue, verzerrungsfreie Sinusfunktion ist. Ein wichtiger Vorteil der vorliegenden Erfindung besteht darin, dass zur Erzielung eines harmonischen Sinussignales nicht unbedingt die Differenz der Signale zweier Elektroden gebildet werden muss, wie es in der Ausführung in EP 1 538 422 zwingend notwendig ist. Die Bildung der Differenz kann jedoch von Nutzen sein, wenn positive und negative Ausgangssignale resultieren sollen. Die Kreisringsegmente sowie die gemeinsame Empfangselektrode überdecken die "Zähne" der Feinspur vollständig. Eine Auswerteschaltung misst das modulierte elektrische Feld zwischen Sende- und Empfangselektroden und berechnet daraus die absolute Position des sich drehenden Objekts. Zur eindeutigen Positionsberechnung wird das elektrische Feld zwischen Sende- und Empfangselektroden der Fein- und der Grobspur gemessen. Aus diesen zwei Messungen lässt sich mittels eines festgelegten Algorithmus der absolute Drehwinkel bestimmen. Im einfachsten Fall, wenn die Grobspur die Periodizität "eins" hat, kann dieser Algorithmus auf die Berechnung des Arcustangens vom Quotienten aus Sinus- und Cosinussignal reduziert werden. Bei mehrpoliger Grobspur ist ein spezieller Algorithmus, ähnlich zum Noniusprinzip, notwendig, um aus den mehrpoligen Fein- und Grobspurwerten die absolute Winkelposition zu erhalten. Dabei darf die örtliche Periodizität der Feinspur kein ganzes Vielfaches der Grobspurperiodizität sein.

Je nach Ausprägung der elektronischen Auswerteschaltung kann die Funktion der Sende- und Empfangselektroden vertauscht werden, d.h. aus den Sendeelektroden werden Empfangselektroden und aus der Empfangselektrode wird eine Sendeelektrode.

**Ausführungsbeispiele**

Nachfolgend wird die Erfindung an Hand von verschiedenen Ausführungsbeispielen, die auch in den dazugehörigen Figuren dargestellt sind, im Detail erläutert. Diese Beschreibungen sollen nicht als limitierende Beispiele der Erfindung gelten, sondern die generelle Wirkungsweise erläutern.

Es zeigen

Fign. 1 - 6    den Stand der Technik wie oben beschrieben;

Fig. 7    die geometrischen Parameter der erfindungsgemässen Rotorform;

Fign. 8a, 8b    eine schematische Darstellung einer erfindungsgemässen Messvorrichtung, mit und ohne Gehäuse;

Fig. 9    die Ansicht der Feinspur der erfindungsgemässen Rotorform;

Fig. 10a    eine Sendeelektrodenplatte gemäss der Erfindung;

Fig. 10b    eine Empfangselektrodenplatte gemäss der Erfindung;

Fig. 11    die phasenverschobenen Ansteuerspannungen der Sendeelektroden;

Fig. 12    eine Auswerteelektronik zur Messung der Kapazität zwischen Sende- und Empfangselektrode;

Fig. 13    einen Rotor mit ausgeprägten, elektrisch leitenden Schichten auf einem isolierenden Träger;

Fn. 14a, 14b    eine erfindungsgemässe Sendeelektroden- bzw. Empfangs- elektrodenplatte mit einer zusätzlichen Elektrode;

Fn. 15a, 15b    Fein- und Grobspur zweier erfindungsgemässer Rotorformen.

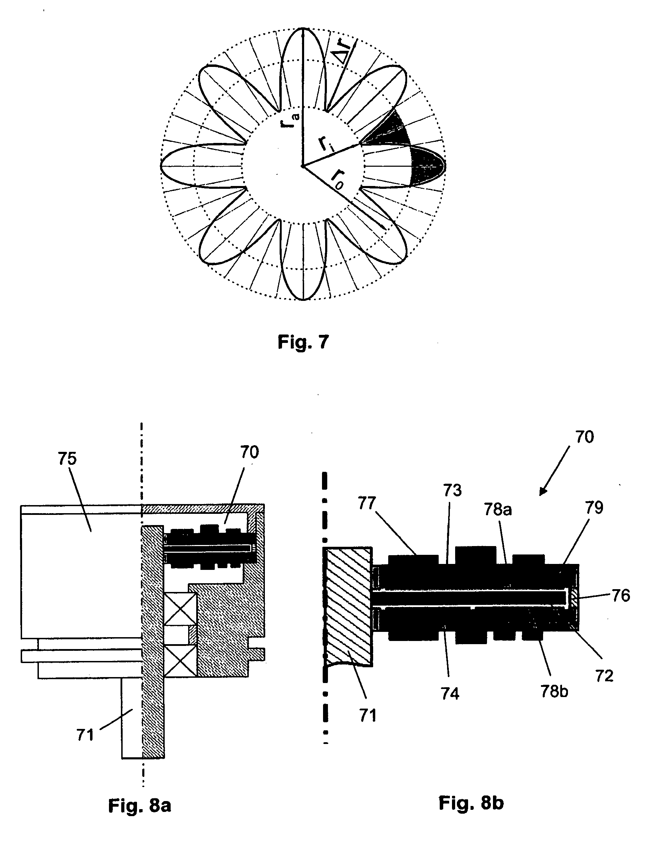

Fig. 7 zeigt die erfindungsgemässe Rotorform mit den geometrischen Parametern. Der Verlauf der Form, die das elektrische Feld beeinflusst, ist charakterisiert durch eine Formel, die die Rotorform in Polarkoordinaten beschreibt, wobei der Koordinatenursprung im Drehzentrum des Rotors liegt. Diese Formel für den Radius der Aussenkontur in Abhängigkeit des Winkels lautet:

$$r(\varphi) = \sqrt{n \cdot a \cdot \cos(n \cdot \varphi) + r_0{}^2}$$

Der Winkel $\varphi$ entspricht dabei dem Azimut des Polarkoordinatensystems. Nachfolgend wird diese Form "elektrisch wirksame Form" genannt.

Die Anzahl "Zähne" in der Rotorform wird mit der Frequenz n definiert. Die "Zahnhöhe" $\Delta r$ kann als Differenz aus maximalem Aussenradius und minimalem Innenradius der Rotorkontur definiert werden. Sie ist von verschiedenen Parametern abhängig und kann mit dem Parameter a eingestellt werden. Dabei gelten folgende Zusammenhänge:

$$r_a = \sqrt{n \cdot a + r_0{}^2} \;,\; r_i = \sqrt{r_0{}^2 - n \cdot a}$$

$$a = \frac{r_a{}^2 - r_0{}^2}{n} \;,\; a = \frac{r_0{}^2 - r_i{}^2}{n}$$

$r_0$ definiert die Kreislinie, die so geartet ist, dass die Flächen, die diese Kreislinie und die Aussenkontur des Rotors einschliessen über und unterhalb der Kreislinie gleich gross sind (siehe graue Flächen in Fig. 7). $r_0$ entspricht dabei dem quadratischen Mittelwert aus Maximalradius $r_a$ und Minimalradius $r_i$. Besteht die Sensorelektrode aus einem Kreisringsegment, so garantiert die erfindungsgemässe Rotorform, dass die vom Rotor überdeckte Elektrodenfläche gemäss einer reinen Sinusfunktion variiert. Diese Überdeckung entspricht einer Faltung zweier Funktionen.

In den Fign. 8a und 8b ist eine erste Ausführungsform der erfindungsgemässen Messvorrichtung 70 zur Drehwinkelmessung gezeigt. Mit einer drehbar gelagerten Welle 71 ist der erfindungsgemässe Rotor 72 fest verbunden. Dieser Rotor liegt in einem festen Abstand zwischen zwei Statoren, der Sendeelektrodenplatte 73 und der Empfangselektrodenplatte 74. Die zwei Statoren sind fest mit dem Gehäuse 75 verbunden und durch einen Distanzring 76 voneinander getrennt. Die Statoren 73 und 74 können aus einer Leiterplatte hergestellt sein, wobei die Sende- und Empfangselektroden 78a und 78b aus den äussersten, dem Rotor zugewandten Kupferschichten bestehen. Dieselben Leiterplatten können gleichzeitig die elektronischen Bauteile der Auswerteschaltung 77 enthalten, wodurch ein sehr kompakter Aufbau der Messvorrichtung 70 erreicht wird. Zur Aufnahme der Lagerung der Welle, sowie zum Schutz gegenüber mechanischen und elektrischen Einflüssen ist die eigentliche Messeinrichtung von einem Gehäuse 75 umgeben. Dieses Gehäuse ist vorteilhaft aus einem elektrisch leitenden Material hergestellt und "geerdet". Um elektrische Fremdfelder wirkungsvoll abzuschirmen, können weitere Kupferschichten der Statorleiterplatten zur Abschirmung verwendet werden. Die inneren Kupferlagen 79 bilden dazu zusammen mit dem leitenden Distanzring 76 eine geschlossene, elektrisch leitende Hülle um die eigentliche Messeinrichtung. Dadurch ist es nicht mehr zwingend nötig, das Gehäuse 75 aus einem leitenden Material herzustellen, wodurch sich neue Möglichkeiten betreffend Herstellkosten und Design z.B. durch die Verwendung eines Kunststoffgehäuses anbieten.

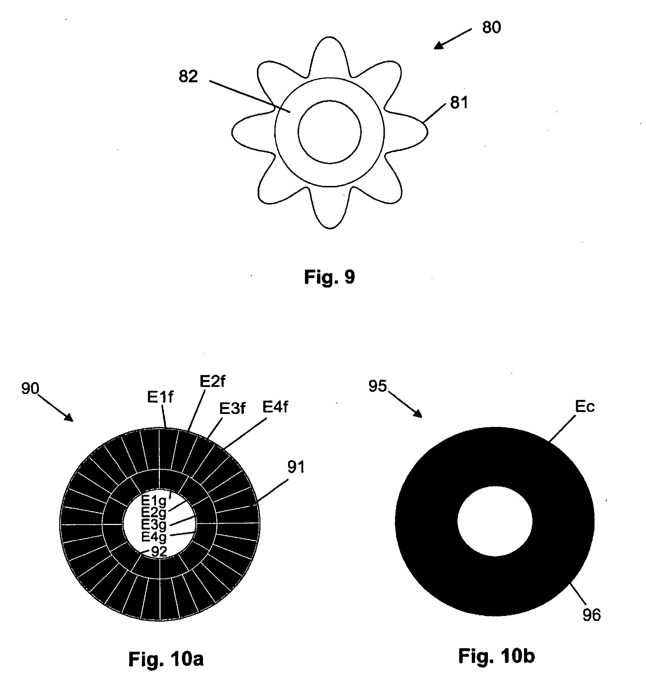

Fig. 9 zeigt die Aufsicht eines erfindungsgemässen Rotors 80. Dieser ist im vorliegenden Ausführungsbeispiel aus einem elektrisch nichtleitenden Material und hat somit dielektrische Eigenschaften. Dreht sich dieser Rotor zwischen der Sende- und Empfangselektrodenplatte, so wird das elektrische Feld gemäss der Form des Rotors moduliert und dementsprechend ergibt sich eine Kapazitätsänderung zwischen den Elektroden. Um die Genauigkeit zu erhöhen, besteht der Rotor erfindungsgemäss aus einer Fein- und Grobspur. Die Feinspur 81 entspricht dabei der Umfangsnaht oder Umfangskante des Rotors und hat in diesem Ausführungsbeispiel eine Polzahl von acht. Durch die spezielle Form der Umfangskante 81 ist die gemessene Kapazitätsänderung in Abhängigkeit des Drehwinkels genau sinusförmig. Die Grobspur 82 ist in diesem Ausführungsbeispiel nur angedeutet und kann verschiedenartig ausgebildet werden. Die Grobspur 82 kann sich in der Dicke (Dickenmodulation) oder in der Dielektrizitätskonstanten (Modulation der Dielektrizitätskonstanten) von der Feinspur unterscheiden. Alternativ kann auch die Grenze oder Trennlinie zwischen den Bereichen 81 und 82 die elektrisch wirksame Form der Grobspur definieren (nicht so in Fig. 9 gezeigt). Die Genauigkeitsanforderungen an die Grobspur sind viel kleiner als für die Feinspur, daher kann die Dickenmodulation oder Modulation der Dielektrizitätskonstanten oder die Form der Trennlinie von der erfindungsgemässen Form abweichen. Die weiteren Ausführungsbeispiele zeigen verschiedene Formen der Grobspur.

Die Fig. 10a und 10b zeigen die Sendeelektrodenplatte 90 und die Empfangselektrodenplatte 95 passend zum Rotor 80 in Fig. 9. Die Feinspur 91 der Sendeelektrodenplatte besteht aus je vier einzelnen Elektroden pro Periode der Rotorstruktur. Das ergibt in diesem Ausführungsbeispiel 32 Einzelelektroden, wobei immer jede vierte der Elektroden elektrisch miteinander verbunden ist. Die Feinspur wird also aus total vier Sendeelektroden E1f, E2f, E3f, E4f verteilt über 360° gebildet. Die Periodenanzahl der Feinspur darf kein ganzzahliges Vielfaches der Periodenanzahl der Grobspur sein (mit der Ausnahme einer Periodenanzahl der Grobspur von "1"). In diesem Ausführungsbeispiel beträgt die Polzahl der Grobspur drei, was zu 12 Einzelelektroden 92 führt. Auch hier ergeben sich durch das Verbinden jeder vierten Einzelelektrode total vier Sendeelektroden E1g, E2g, E3g, E4g. Die Empfangselektrode (Ec) auf der Empfangselektrodenplatte 95 ist gemeinsam für Fein- und Grobspur. Es können auch getrennte Empfangselektroden vorgesehen sein.

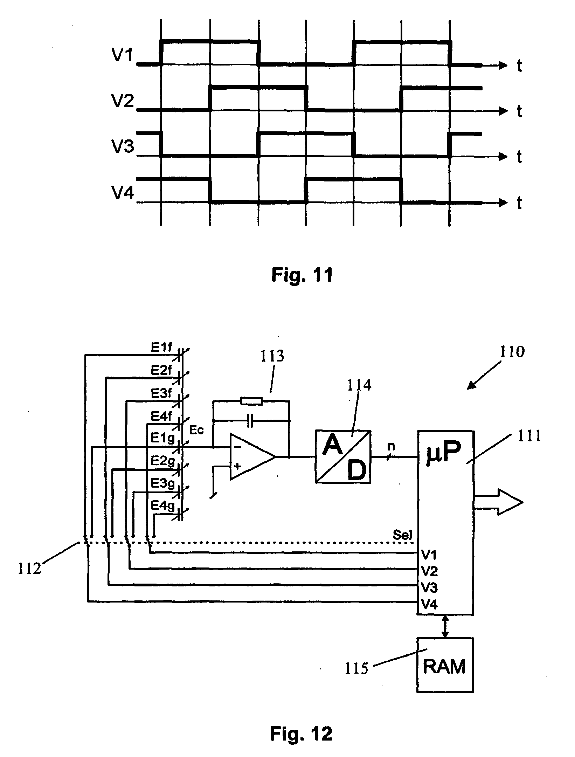

Erfindungsgemäss werden die jeweils vier Sendeelektroden der Grob- und Feinspur mit vier um je 90° verschobenen Rechtecksignalen betrieben. Diese sind in Fig. 11 als V1, V2, V3, V4 bezeichnet. Durch die Kombination der erfindungsgemässen Rotorform und der zeitlich verschobenen Ansteuerung der vier Sendeelektroden entspricht die Ausgangsspannung des Ladungsverstärkers 113 in Fig. 12 direkt und exakt dem Sinus resp. dem Kosinus des Drehwinkels.

Eine mögliche Auswerteschaltung 110 zum Messen der Kapazitätswerte zeigt Figur 12. Diese Schaltung basiert auf der Auswerteschaltung aus EP 1 251 338, dem o.g. Patent der Camille Bauer AG. Die acht Messkapazitäten der Grob- und Feinspur sind dabei als veränderliche Kapazitäten dargestellt und mit E1f, E2f, E3f, E4f und E1g, E2g, E3g, E4g bezeichnet. Jede Sendeelektrode bildet mit der gemeinsamen Empfangselektrode eine winkelabhängige Kapazität. Ein Mikrokontroller 111 generiert die Anregungsspannungen V1 bis V4, die über einen Umschalter 112 entweder an die entsprechenden Sendeelektroden der Grobspur, E1g bis E4g, oder die Sendeelektroden der Feinspur, E1f bis E4f, geführt werden, wie sie in Fig. 10a dargestellt sind. Der strukturierte dielektrische Rotor 80 beeinflusst das elektrische Feld zwischen Sende- und Empfangselektroden und somit die Ladung, die durch diese Kapazitäten fliesst. Ein Ladungsverstärker 113 wandelt die gespeicherte Ladung in eine Spannung um, die im Wandler 114 analog-digital gewandelt wird. Der Mikrokontroller 111 liest die gewandelten Spannungswerte und berechnet den Drehwinkel zwischen Rotor und Statoren. Ausserdem generiert der Mikrokontroller 111 das Steuersignal Sel für den Umschalter 112, der zwischen den Elektroden der Feinspur 91 und der Grobspur 92 umschaltet. In einem externen Speicher 115 können zusätzlich Kalibrier-, Rechen- und Gerätedaten abgespeichert sein. Die Nullspannungsmessung, wie sie in der EP 1 251 338 beschrieben ist, ist in diesem Blockdiagramm Fig. 12 der Einfachheit halber nicht eingezeichnet, wird aber vorteilhaft angewendet.

Die Ausgangssignale der Auswerteschaltung 110 entsprechen einer Sinus-und Kosinusspannung hoher Güte. Aus deren Quotienten lässt sich im Mikrokontroller durch eine Arcustangensfunktion der Drehwinkel berechnen. Durch die Quotientenbildung wird das System unempfindlich gegenüber Amplitudenänderungen der Sinus- und Kosinussignale, die beispielsweise durch Temperatur- und Feuchteeinflüsse, Verstärkungsvariationen in der Auswerteschaltung, Änderungen in der Versorgungsspannung, Drift von Bauteilwerten und/oder Amplitudenänderungen durch Axialspiel des Rotors verursacht werden.

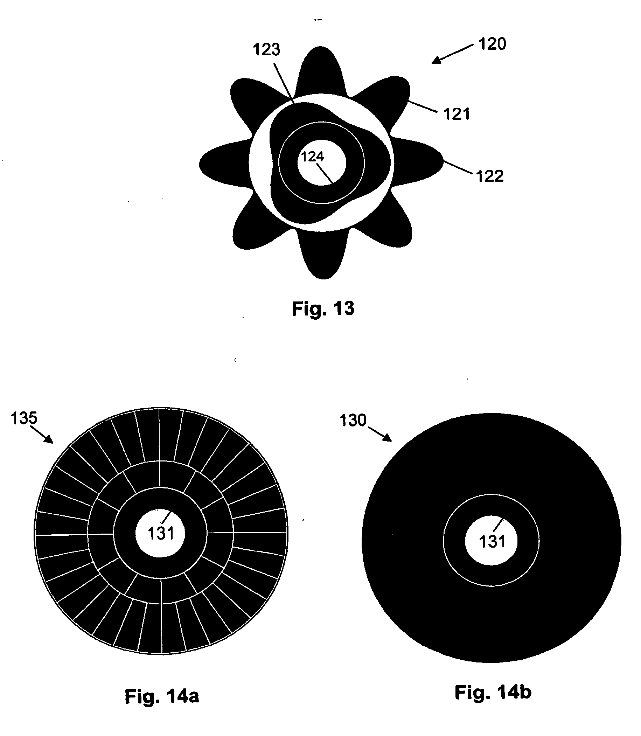

In einer anderen Ausführung kann der Rotor 80 in Fig. 9 aus einem elektrisch leitenden Material bestehen. Wird der Rotor geerdet oder auf einem konstanten elektrischen Potential gehalten, so arbeitet der Rotor als Abschirmung und beeinflusst gemäss seiner Struktur die gemessenen Kapazitäten zwischen Sende- und Empfangselektroden. Wie in den Fign. 13, 14a und 14b gezeigt, kann der Rotor über eine zusätzliche zentrische Elektrode 131 auf den Statoren 130 bzw. 135 und einer dritten Spur 124 auf dem Rotor 120 mittels einer Regelschaltung reibungs- und verschleissfrei virtuell geerdet werden.

Alternativ kann der Rotor auch gemäss Fig. 13 strukturiert sein, wo er aus einem isolierenden Träger 120 und zumindest einer dünnen, elektrisch leitenden Schicht 121 besteht. Alle strukturierten, in der Figur dunkel gezeigten Flächen können z.B. aus Kupfer bestehen, sind elektrisch miteinander verbunden und werden über eine Regelschaltung und zusätzliche Elektroden virtuell geerdet. Als Träger kommen dabei z.B. Glas, Keramik, Kunststoff und Glas-Epoxy in Frage. Die leitende Schicht 121 kann entweder aufgedampft, aufgepresst oder aufgeklebt werden. Im einfachsten Fall kann eine mehrschichtige Leiterplatte verwendet werden. In diesem Ausführungsbeispiel hat die Feinspur 122 eine Periodizität von acht und die Grobspur 123 eine von drei. Beide Spuren sind hier als "verzerrte Sinusformen" gemäss den Parametern in Fig. 7 ausgebildet.

In ähnlicher Weise kann eine andere Ausführungsform eines Rotors aus dielektrischen Material einen dünneren und einen dickeren Bereich aufweisen, wobei der dünnere Bereich in Fig. 13 weiss und der dickere Bereich schwarz gezeigt ist. Z.B. kann der dünnere Bereich ca 1 mm und der dickere ca. 2mm Dicke aufweisen. Die jeweiligen Aussenkanten oder -nähte entsprechen - bei der Grobspur zumindest näherungsweise - der elektrisch wirksame Form.

Besteht der Rotor aus elektrisch leitendem Material, so kann die Grobspur nicht wie oben beschrieben ausgeführt werden, da sie nicht vom Träger isoliert werden kann. In diesem Fall ist ein anderer Ansatz erforderlich.

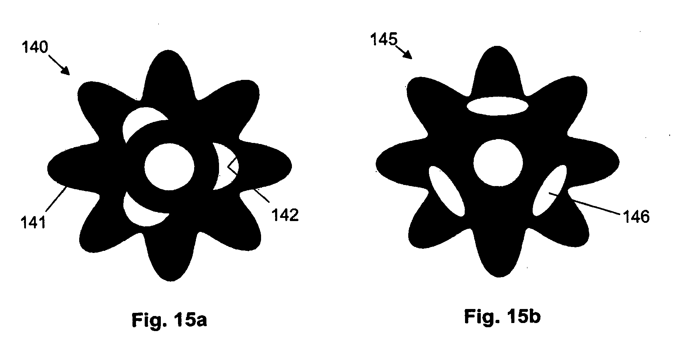

Fig. 15a zeigt einen erfindungsgemässen Rotor 140 aus leitfähigem Material, z.B. aus Aluminium oder aus einem leitenden Kunststoff. Die Aussennaht oder -kante 141 hat wiederum die erfindungsgemässe Form einer "verzerrten Sinusform". Die Grobspur wird in Form von Löchern gebildet, deren Kontur 142 ebenfalls diese "verzerrte Sinusform" aufweisen kann. Da dabei nicht die durchgehende Naht der Grobspur als Ausfräsung definiert wird, sondern nur die Fläche, die ausserhalb des Kreisringes mit dem Radius r0 (siehe Fig. 7) liegt, muss bei der Auswertung zwingend die Differenz zweier Elektroden gebildet werden, um einen reinen Sinusverlauf der Kapazitätsänderung zu erhalten.

Eine weitere Ausführungsform der Erfindung zeigt Figur 15b. Der in Figur 15a gezeigte Rotor 140 ist durch die spitzen Winkel in der Grobspurkontur 142 nur mit grossem Aufwand und mit eingeschränkter Genauigkeit herstellbar. Dieses Problem umgeht der in Fig. 15b dargestellte Rotor 145 indem anstatt der spitzwinkligen Struktur ellipsenförmige Löcher als Grobspurkontur 146 in das Material eingearbeitet, z.B. gefräst werden. Zwar kann die Genauigkeit der Grobspurwinkelmessung darunter leiden, weil die resultierenden Sinussignale verzerrt sind. Da die Genauigkeit der Grobspur jedoch nur so gut sein muss, dass der entsprechende Feinspursektor sicher bestimmt werden kann, kann so die Herstellung des Rotors vereinfacht werden. Simulationen mit einer Finite-Elemente-Methode zeigen, dass eine Genauigkeit der Grobspur von $\pm$ 1° ohne grössere Optimierung erzielt werden kann.

**Patentansprüche**

1. Kapazitiver Drehwinkelsensor mit mindestens einem Stator (90, 135) und mit einem drehbaren Rotor (80, 120, 140, 145), der mit einem Objekt verbunden ist, dessen Drehwinkel gemessen werden soll, wobei der Stator kreisringsektorförmige Kondensatorelektroden (91, 92) aufweist und der Rotor eine elektrisch wirksame Form hat, so dass bei Drehung des Rotors das zwischen den Kondensatorelektroden und dem Rotor herrschende elektrische Feld eine vom Drehwinkel abhängige, periodische Änderung erfährt,
*dadurch gekennzeichnet, dass*

- der Rotor eine elektrisch wirksame Form oder Grösse aufweist, deren Berandung gemäss der Formel

$$r(\varphi) = \sqrt{n \cdot a \cdot \cos(n \cdot \varphi) + r_0^2}$$ in Polarkoordinaten gegeben ist, worin

- $r(\varphi)$ die elektrisch wirksame Grösse, insbesondere der Radius der Kontur der elektrisch wirksamen Form,
- $\varphi$ der Azimut des Polarkoordinatensystems,
- $n$ die Anzahl örtlicher Perioden über 360° in der elektrisch wirksamen Form,
- $r_0$ der quadratische Mittelwert aus Maximalradius $r_a$ und Minimalradius $r_i$ der Berandung der elektrisch wirksamen Form,
- $a$ eine Konstante ist, die für die Variation des Radius $r(\varphi)$ verantwortlich ist, wobei

$$a = \frac{r_a^2 - r_0^2}{n} = \frac{r_0^2 - r_i^2}{n} \ .$$

2. Drehwinkelsensor nach Anspruch 1, *dadurch gekennzeichnet, dass* der Rotor (80, 120, 140, 145) mindestens zwei konzentrische, unterschiedliche Rotorbereiche aufweist, die Spuren bilden, eine Grobspur (82, 123, 142, 146) und eine Feinspur (81, 121, 141), wobei diese Spuren über den Umfang unterschiedlich variierende Aussenform und/oder Dicke und/oder Dielektrizitätskonstante und/oder Leitfähigkeit aufweisen und jede Spur mit einem gegenüberliegenden Bereich einer segmentierten Kondensatorelektrode (91, 92) in elektrischer Wirkverbindung steht, und dass zumindest die Feinspur die elektrisch wirksame Form aufweist.

3. Drehwinkelsensor nach Anspruch 2, *dadurch gekennzeichnet, dass* die Grobspur (82, 123, 142, 146) konzentrisch innen und die Feinspur (81, 121, 141) konzentrisch aussen angeordnet ist.

4. Drehwinkelsensor nach Anspruch 3, *dadurch gekennzeichnet, dass* die Grobspur (82, 123, 142, 146) der elektrisch wirksamen Form zumindest angenähert entspricht.

5. Drehwinkelsensor nach einem der vorhergehenden Ansprüche, *dadurch gekennzeichnet, dass* ein dritter, konzentrisch vorzugsweise innen angeordneter Rotorbereich (124) vorgesehen ist, der eine dritte Spur darstellt, und dass die Kondensatorelektroden einen Bereich (131) aufweisen, mit dem diese dritte Spur in elektrischer Wirkverbindung steht.

6. Drehwinkelsensor nach einem der vorhergehenden Ansprüche, *dadurch gekennzeichnet, dass* ein zweiter Stator vorgesehen ist, der eine unsegmentierte Kondensatorelektrode (95, 130) aufweist und dass der Rotor zwischen der segmentierten (90, 135) und der unsegmentierten Kondensatorelektrode (95, 130) angeordnet ist.

7. Drehwinkelsensor nach einem der vorhergehenden Ansprüche, *dadurch gekennzeichnet, dass* die Grenze auf dem Rotor zwischen den Spuren (81, 82 und 122, 123, 142) eine elektrisch wirksame Form definiert, vorzugsweise die elektrisch wirksame Form der Grobspur (123, 142).

8. Drehwinkelsensor nach einem der vorhergehenden Ansprüche, *dadurch gekennzeichnet, dass* die elektrisch wirksame Form der Feinspur durch die äussere Umfangskante (81, 121, 141) des Rotors gebildet wird.

9. Drehwinkelsensor nach einem der vorhergehenden Ansprüche, *dadurch gekennzeichnet, dass* mindestens eine der Spuren (81, 142) des Rotors aus einem dielektrischen Material besteht.

10. Drehwinkelsensor nach einem der vorhergehenden Ansprüche, *dadurch gekennzeichnet, dass* der Rotor aus dielektrischem Material besteht, wobei die Grobspur durch Dickenmodulation des Materials gebildet wird und/oder die Feinspur durch eine Umfangskante gemäss der elektrisch wirksamen Form.

11. Drehwinkelsensor nach einem der vorhergehenden Ansprüche, *dadurch gekennzeichnet,* **dass** der Rotor aus dielektrischem Material besteht, wobei die Umfangskante der Grobspur zumindest näherungsweise und die Umfangskante der Feinspur exakt durch die elektrisch wirksame Form definiert ist.

12. Drehwinkelsensor nach einem der vorhergehenden Ansprüche, *dadurch gekennzeichnet,* **dass** mindestens eine der Spuren (122, 123) des Rotors aus elektrisch leitendem Material besteht, wobei alle leitenden Spuren über eine Regelschaltung auf einem konstanten elektrischen Potential gehalten werden.

13. Drehwinkelsensor nach einem der vorhergehenden Ansprüche, *dadurch gekennzeichnet,* **dass** die Feinspur und/oder die Grobspur (142) aus durchgehenden, vorzugsweise elliptischen Löchern (146) besteht, deren radial äussere und/oder radial innere Abgrenzung die elektrisch wirksame Form der jeweiligen Spur definiert.

14. Drehwinkelsensor nach einem der vorhergehenden Ansprüche, *dadurch gekennzeichnet,* **dass** die segmentierten Kondensatorelektroden aus mindestens zwei konzentrisch angeordneten, kreisringförmigen Bereiche (91, 92) bestehen, die unterschiedlich segmentiert sind.

15. Drehwinkelsensor nach einem der vorhergehenden Ansprüche, *dadurch gekennzeichnet,* **dass** der Stator auf seiner den Kondensatorelektroden abgewandten Seite zumindest einen Teil einer Versorgungs- und/oder Auswerteschaltung (110) des Drehwinkelsensors aufweist, wobei diese vorzugsweise einen Mikroprozessor und/oder einen integrierten Kapazitäts-Digitalwandler umfasst.

**Claims**

1. A capacitive rotation angle sensor with at least one stator (90, 135) and with a rotatable rotor (80, 120, 140, 145), which is connected with an object, whose rotation angle is to be measured , wherein the stator has circular ring sector-shaped capacitor electrodes (91, 92) and the rotor has an electrically active shape so that on rotation of the rotor the electric field prevailing between the capacitor electrodes and the rotor experiences a periodic change dependent on the rotation angle, **characterised in that** the rotor has an electrically active shape or size whose boundary is given in polar coordinates by the formula $r(\varphi) = \sqrt{n \cdot a \cdot \cos(n \cdot \varphi) + r_0{}^2}$ wherein

   - $r(\varphi)$ is the electrically active size, particularly the radius of the contour, of the electrically active shape,
   - $\varphi$ is the azimuth of the polar coordinate system
   - $n$ is the number of positional periods above 360° in the electrically active shape,
   - $r_0$ is the quadratic average of the maximum radius $r_a$ and the minimum radius $r_i$ of the boundary of the electrically active shape,
   - $a$ is a constant, which is responsible for the variation of the radius $r(\varphi)$, wherein

   $$a = \frac{r_a{}^2 - r_0{}^2}{n} = \frac{r_0{}^2 - r_i{}^2}{n} \ .$$

2. A rotation angle sensor as claimed in claim 1, **characterised in that** the rotor (80, 120, 140, 145) has at least two different, concentric rotor regions, which define tracks, a coarse track (62, 123, 142, 146) and a fine track (81, 121, 141), wherein these tracks have differently varying outer shape and/or thickness and/or dielectric constant and/or conductivity over their area and each track is in electrical operative connection with an opposing region of a segmented capacitor electrode (91, 92) and that at least the fine track has the electrically active shape.

3. A rotation angle sensor as claimed in claim 2, **characterised in that** the coarse track (82, 123, 142, 146) is arranged concentrically inwardly and the fine track (81, 121, 141) is arranged concentrically outwardly.

4. A rotation angle sensor as claimed in claim 3, **characterised in that** the coarse track (82, 123, 142, 146) at least approximately corresponds to the electrically active shape.

**5.** A rotation angle sensor as claimed in one of the preceding claims, **characterised in that** a third, concentric, preferably inwardly disposed rotor region (124) is provided, which represents a third track and that the capacitor electrodes have a region (131), which is in electrical operative connection with this third track.

**6.** A rotation angle sensor as claimed in one of the preceding claims, **characterised in that** a second stator is provided, which has an unsegmented capacitor electrode (95, 130) and that the rotor is disposed between the segmented (90, 135) and the unsegmented capacitor electrodes (95, 130).

**7.** A rotation angle sensor as claimed in one of the preceding claims, **characterised in that** the boundary on the rotor between the tracks (81, 82 and 122, 123, 142) defines an electrically active shape, preferably the electrically active shape of the coarse track (123, 142).

**8.** A rotation angle sensor as claimed in one of the preceding claims, **characterised in that** the electrically active shape of the fine track is defined by the outer peripheral edge (81, 121, 141) of the rotor.

**9.** A rotation angle sensor as claimed in one of the preceding claims, **characterised in that** at least one of the tracks (81, 142) on the rotor consists of a dielectric material.

**10.** A rotation angle sensor as claimed in one of the preceding claims, **characterised in that** the rotor consists of dielectric material, wherein the coarse track is formed by thickness modulation of the material and/or the fine track is formed by a peripheral edge in accordance with the electrically active shape.

**11.** A rotation angle sensor as claimed in one of the preceding claims, **characterised in that** the rotor consists of dielectric material, wherein the peripheral edge of the coarse track is defined at least approximately and the peripheral edge of the fine track is defined exactly by the electrically active shape.

**12.** A rotation angle sensor as claimed in one of the preceding claims, **characterised in that** at least one of the tracks(122, 123) on the rotor consists of electrically conductive material, wherein all the conductive tracks are maintained at a constant electric potential by means of a control circuit.

**13.** A rotation angle sensor as claimed in one of the preceding claims, **characterised in that** the fine track and/or the coarse track (142) consists of holes (146), which pass through and are preferably elliptical, the radially outer and/or radially inner boundary of which defines the electrically active shape of the respective track.

**14.** A rotation angle sensor as claimed in one of the preceding claims, **characterised in that** the segmented capacitor electrodes consist of at least two concentrically arranged, circular annular regions (91, 92), which are differently segmented.

**15.** A rotation angle sensor as claimed in one of the preceding claims, **characterised in that** on its side remote from the capacitor electrodes the stator has at least one portion of a supply and/or analysis circuit (10) of the rotation angle sensor, wherein this preferably includes a microprocessor and/or an integrated capacitance to digital convertor.

**Revendications**

**1.** Capteur d'angle de rotation capacitif comprenant au moins un stator (90, 135) et un rotor rotatif (80, 120, 140, 145) qui est relié à un objet dont l'angle de rotation doit être mesuré, le stator présentant des électrodes de condensateur (91, 92) en forme de secteur d'anneau circulaire et le rotor ayant une forme électriquement efficace telle que, lors de la rotation du rotor, le champ électrique régnant entre les électrodes de condensateur et le rotor subit une variation périodique dépendante de l'angle de rotation,
*caractérisé en ce que*

- le rotor présente une forme ou grandeur électriquement efficace dont la bordure est donnée en coordonnées polaires par la formule $r(\varphi) = \sqrt{n \cdot a \cdot \cos(n \cdot \varphi) + r_0^2}$, dans laquelle
- $r(\varphi)$ est la grandeur électriquement efficace, en particulier le rayon du contour de la forme électriquement efficace,

- φ l'azimut du système de coordonnées polaires,
- *n* le nombre de périodes locales sur 360° dans la forme électriquement efficace,
- $r_0$ la moyenne quadratique du rayon maximum $r_a$ et du rayon minimum $r_i$ de la bordure de la forme électriquement efficace,
- a une constante qui est responsable de la variation du rayon $r(\varphi)$, avec

$$a = \frac{r_a^2 - r_0^2}{n} = \frac{r_0^2 - r_i^2}{n}.$$

2. Capteur d'angle de rotation selon la revendication 1, *caractérisé en ce que* le rotor (80, 120, 140, 145) présente au moins deux zones de rotor concentriques différentes qui forment des pistes, une piste grossière (82, 123, 142, 146) et une piste de précision (81, 121, 141), ces pistes présentant une forme extérieure et/ou une épaisseur et/ou une constante diélectrique et/ou une conductivité variant différemment sur la périphérie et chaque piste étant en interaction électrique avec une zone opposée d'une électrode de condensateur segmentée (91, 92), et qu'au moins la piste de précision présente la forme électriquement efficace.

3. Capteur d'angle de rotation selon la revendication 2, *caractérisé en ce que* la piste grossière (82, 123, 142, 146) est disposée concentriquement intérieurement et la piste de précision (81, 121, 141) concentriquement extérieurement.

4. Capteur d'angle de rotation selon la revendication 3, *caractérisé en ce que* la piste grossière (82, 123, 142, 146) correspond au moins approximativement à la forme électriquement efficace.

5. Capteur d'angle de rotation selon l'une des revendications précédentes, *caractérisé en ce qu'*une troisième zone de rotor (124) disposée concentriquement, de préférence intérieurement, est prévue, qui constitue une troisième piste, et que les électrodes de condensateur présentent une zone (131) avec laquelle cette troisième piste est en interaction électrique.

6. Capteur d'angle de rotation selon l'une des revendications précédentes, *caractérisé en ce qu'*un deuxième stator est prévu, qui présente une électrode de condensateur non segmentée (95, 130) et que le rotor est disposé entre l'électrode de condensateur segmentée (90, 135) et celle non segmentée (95, 130).

7. Capteur d'angle de rotation selon l'une des revendications précédentes, *caractérisé en ce que* la limite sur le rotor entre les pistes (81, 82 et 122, 123, 142) définit une forme électriquement efficace, de préférence la forme électriquement efficace de la piste grossière (123, 142).

8. Capteur d'angle de rotation selon l'une des revendications précédentes, *caractérisé en ce que* la forme électriquement efficace de la piste de précision est formée par le bord périphérique extérieur (81, 121, 141) du rotor.

9. Capteur d'angle de rotation selon l'une des revendications précédentes, *caractérisé en ce qu'*au moins une des pistes (81, 142) du rotor est composée d'un matériau diélectrique.

10. Capteur d'angle de rotation selon l'une des revendications précédentes, *caractérisé en ce que* le rotor est composé d'un matériau diélectrique, la piste grossière étant formée par modulation d'épaisseur du matériau et/ou la piste de précision par un bord périphérique conforme à la forme électriquement efficace.

11. Capteur d'angle de rotation selon l'une des revendications précédentes, *caractérisé en ce que* le rotor est composé d'un matériau diélectrique, le bord périphérique de la piste grossière étant défini au moins approximativement et le bord périphérique de la piste de précision exactement par la forme électriquement efficace.

12. Capteur d'angle de rotation selon l'une des revendications précédentes, *caractérisé en ce qu'*au moins une des pistes (122, 123) du rotor est composée d'un matériau électriquement conducteur, toutes les pistes conductrices étant maintenues à un potentiel électrique constant par un circuit de régulation.

13. Capteur d'angle de rotation selon l'une des revendications précédentes, *caractérisé en ce que* la piste de précision et/ou la piste grossière (142) sont composées de trous traversants (146), de préférence elliptiques, dont la délimitation radialement extérieure et/ou radialement intérieure définit la forme électriquement efficace de la piste respective.

14. Capteur d'angle de rotation selon l'une des revendications précédentes, *caractérisé en ce* **que** les électrodes de condensateur segmentées sont composées d'au moins deux zones (91, 92) en forme d'anneau circulaire disposées concentriquement qui sont segmentées de manière différente.

15. Capteur d'angle de rotation selon l'une des revendications précédentes, *caractérisé en ce* **que** le stator présente de son côté opposé aux électrodes de condensateur au moins une partie d'un circuit d'alimentation et/ou d'évaluation (110) du capteur d'angle de rotation, celle-ci comprenant de préférence un microprocesseur et/ou un convertisseur capacité-numérique intégré.

**Fig. 1**

**Fig. 2a**

**Fig. 2b**

Fig. 3

Fig. 4

51

E1

E2

E3

E4

60°

30°

**Fig. 5**

**Fig. 6**

**Fig. 7**

**Fig. 8a**

**Fig. 8b**

80

82

81

**Fig. 9**

90

E2f

E1f

E3f E4f

91

E1g
E2g
E3g
E4g
92

**Fig. 10a**

95

Ec

96

**Fig. 10b**

**Fig. 11**

**Fig. 12**

123

120

121

124

122

**Fig. 13**

135

131

130

131

**Fig. 14a**

**Fig. 14b**

**Fig. 15a**

**Fig. 15b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4234016 A1
- EP 1251338 A
- EP 1173730 A
- EP 1538422 A
- US 4429307 A